# EUROPEAN PATENT SPECIFICATION

(11) **EP 2 781 054 B1**
(45) Date of publication and mention of the grant of the patent: **27.05.2020**
(21) Application number: 12813114.1
(22) Date of filing: 23.11.2012
(51) Int. Cl.: H04L 12/24, H04L 29/08

(54) **METHOD, COMPUTER PROGRAM AND SYSTEM FOR PROVISIONING IP TERMINALS IN A LOCAL NETWORK**
VERFAHREN, COMPUTERPROGRAMM UND SYSTEM ZUR BEREITSTELLUNG VON IP-ENDGERÄTEN IN EINEM LOKALEN NETZWERK
PROCÉDÉ, PROGRAMME INFORMATIQUE ET SYSTÈME DE MISE EN SERVICE DE TERMINAUX IP DANS UN RÉSEAU LOCAL

(30) Priority: 18.11.2011 NO 20111584
(43) Date of publication of application: 24.09.2014
(73) Proprietor: Pexip AS, 0283 Oslo (NO)
(72) Inventor: MIDTSKOGEN BERGER, Thomas, 0957 Oslo (NO); LIA, Tom-Erik, 1831 Askim (NO); SAGEN, Michel Asbjørn, 1362 Hosle (NO)
(74) Representative: Valea AB
(86) International application number: PCT/IB2012/056672
(87) International publication number: WO 2013/072904

(56) References cited:
- WO-A2-00/45321
- US-A1- 2007 237 141
- US-A1- 2011 208 857

## Description

### Field of the invention

The present invention relates to provisioning of IP communication terminals.

### Background of the invention

The IP (Internet Protocol) data network has created a number of opportunities and challenges for multimedia and voice Communications Service Providers. Unprecedented levels of investment are being made in the data network backbone by incumbent telecommunication operators and next generation carriers and service providers. At the same time, broadband access technologies are bringing high speed Internet access to a wide community of users. Service providers would like to make use of the IP data network to deliver voice, video and data services right to the desktop, the office and the home alongside high speed Internet access.

The H.323 standard applies to multimedia communications over Packet Based Networks that have no guaranteed quality of service. It has been designed to be independent of the underlying transport network and protocols. Today the IP data network is the default and ubiquitous packet network and the majority of implementations of H.323 are over an IP data network. Other protocols for real-time (voice and video) communications, for example, SIP (Session Initiated Protocol) also use the IP data network for the transport of call signaling and media. New protocols for new applications associated with the transport of real-time voice and video over IP data networks are also expected to be developed.

Hitherto, there have been a number of barriers to the mass uptake of multimedia (particularly video) communications. Ease of use, quality, cost and communications bandwidth have all hampered growth in the market. Technological advances in video encoding, the ubiquity of cheap IP access and the current investment in the data network now alleviates most of these issues making multimedia communications readily available.

Service provider networks typically utilize packet-switched IP networks through which multiple enterprise subscriber networks may access a global IP network, such as the Internet. Typically, the service provider network includes an access point, such as a POP. The POP has a unique IP address that a device on the enterprise subscriber network may contact to access network.

Traffic coming into the POP can be classified into videoconferencing data and non-videoconferencing data. Videoconferencing data typically includes control data and streaming voice and audio data according to the H.323 or SIP standards. H.323 refers to International Telecommunications Union, Telecommunications Sector, Recommendation H.323 (version 1, published November 1996; version 2, published 1998, entitled, "Visual Telephone Systems and Equipment for Local Area Networks Which Provide a Non-guaranteed Quality of Service,". SIP refers to Session Initiation Protocol Proposed Standard (RFC 2543), Internet Engineering Task Force (IETF) (published March 1999).

Each of enterprise subscriber networks typically includes a plurality of terminals. Terminals, along with video conferencing service switches and the various other components of system, are typically H.323 or SIP compliant. The terminals are typically videoconferencing devices configured to display and record both video and audio. The terminals may be desktop computers, laptop computers, mainframes and/or workstation computers, or other videoconferencing devices.

In video conferencing, provisioning means inserting required system data in the endpoint such as access information to the VSP (Video conference Service Provider), user credentials, identification of the subscriber in the VSP architecture which typically could be an URI, et.c. Provisioning is traditionally done either manually by typing the required data in a User Interface on each endpoint, or remotely from a Video conferencing Management Suit where the endpoints are already registered. The provisioning process is one of many technical thresholds for the use of video conference equipment. A user is rarely trained in inserting advanced settings in an endpoint. When batches of endpoints are to be provisioned, manual provisioning will be too time consuming, and the risk of an erroneous insertion of data is high. There is a need for a process for identifying endpoints connected to a network and for automatically provisioning the identified endpoints with the correct provisioning data e.g. when a new subscriber at a VSP is to initiate the subscription and connect its endpoint to the VSP's network.

US 2007/0237141 discloses network device detection, identification and management. First, a range network addresses for devices is scanned. Then, device information from each of the accessible devices is acquired. The network is scanned for devices by sending a request to each of a plurality of network addresses. A response is received from one or more of the devices. A hardware address is obtained for at least some of the responding devices. The device is identified based on the hardware address. A user interface displays the result of the scan along with the more specific identifying information for some or all of the responding devices.

US 2011/208857 A1 discloses access to remote devices through existing infrastructure without the need for proprietary systems. An IT administrator or other administrator may remotely access and update software and hardware, track device data plan usage statistics, provide live support, and track current and historical device locations. The phone and messaging feature enables an administrator to access information regarding data plan and usage statistics of devices. This allows organizations to optimize data plans based on messaging, e-mail, and other data plan statistics.

WO 00/45321 A2 discloses to publish content associated with an electronic file attached to an electronic mail message by executing instructions contained in the electronic mail attachment and accessing the content at a remote computer server identified by the attached file. The attached file includes an identifier for a remote server connected to a distributed computer network. This identified remote server typically hosts a web site containing content intended for viewing by the recipient of the electronic mail message. In response to launching the attached file of the electronic mail message with a viewer program, a browser program can be opened to enable the recipient to view the content of the identified remote server. This supports the communication of electronic content by using an electronic mail message to transport an electronic file attachment having instructions that, when executed by the recipient's computer, enable the recipient to view the electronic content by accessing a server computer connected to distributed computer network.

### Summary of the invention

The subject matter of the present invention is a method for provisioning one or more IP terminals connected to a IP network according to independent claim 1, by running a computer executable code on the computer which includes the steps of extracting the IP address of the computer, respectively addressing one or more media communication protocol requests for all IP addresses in the range or segment in which the IP address of the computer belongs, and unicasting them in the first IP network from the computer, identifying the one or more IP terminals and corresponding media communication protocol from media communication protocol responses received by the computer and remotely provisioning the one or more IP terminals from the computer and/or the provisioning server. The subject matter of the invention also includes a corresponding provisioning system according to independent claim 11.

### Brief description of the drawings

Figure 1 shows example of components that may be hosted by a VSP,
Figure 2 shows the components of figure 1 in a global architecture of a VSP network,
Figure 3 illustrates a computer and video endpoints in a LAN,
Figure 4 is an example of the content of an activation email from a VSP
Figure 5 illustrate the data flow between the provisioning server, the LAN and internally in the LAN according to one embodiment of the present invention,

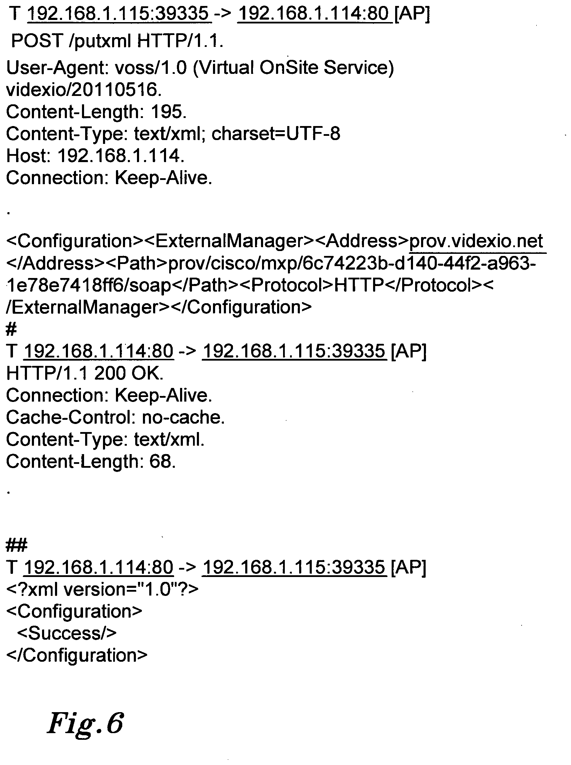

Figure 6 shows an example of the content of an XML file used to provision video endpoints.

### Detailed description of an example embodiment

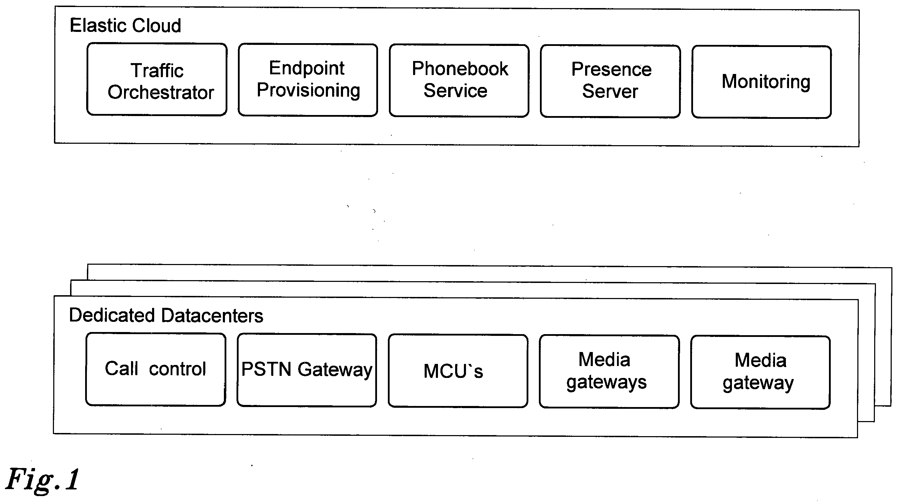

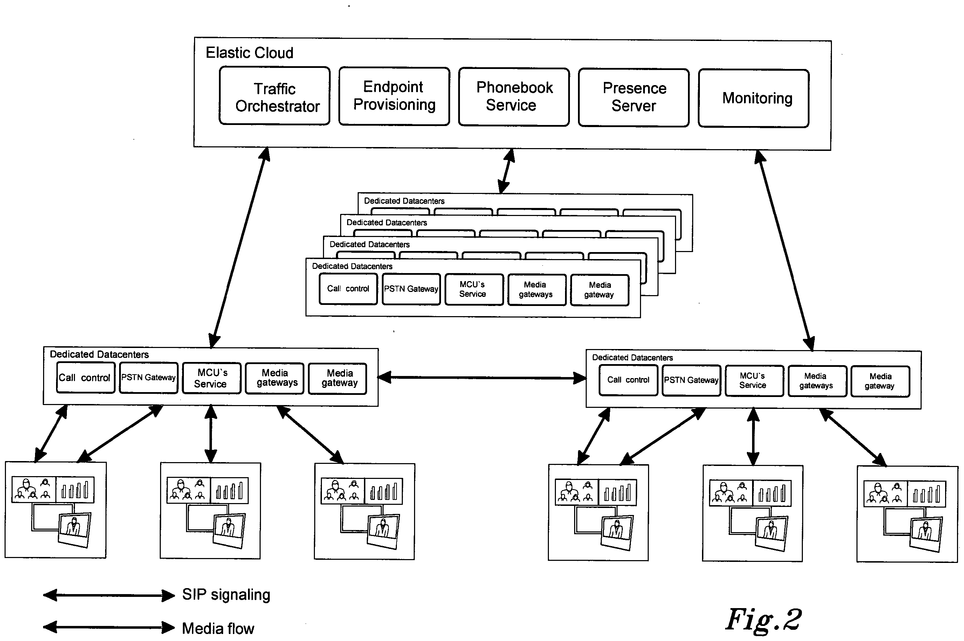

Figure 1 shows an example of the components that may be hosted by a VSP providing video conference and related services to subscribers of the service through a public IP network. The components are divided in two groups - elastic cloud and dedicated datacenters. The elastic cloud includes components related to administration, monitoring and add-on services, while the dedicated data centers include components related to handling media like gateways for converting video data between different formats and standards, Multipoint Control Unit (MCU) for bridging and mixing video conferencing connections providing the capability for 3 or more terminals and gateways to participate in a multipoint conference and call control e.g. providing firewall traversal and NAT conversion of media data. Figure 2 further illustrates the elastic cloud and the dedicated data centers in a global architecture of a VSP network. The dedicated datacenters could either reside centrally in the cloud or being distributed and dedicated to each LAN to which the subscribers' video terminals are connected. The elastic cloud is located centrally through which only signaling is routed, while the media flow is routed directly between the dedicated data centers.

The present invention is related to one of the specific components in the elastic cloud, namely the endpoint provisioning component. As already mentioned provisioning in telecommunication is the process of preparing and equipping terminals to allow it to be provided with services to a service provider's subscribers. It is also equates to "initiation" and includes altering the state of an existing priority service or capability. In video conferencing, provisioning means inserting required system data in the endpoint such as access information to the VSP, user credentials, identification of the subscriber in the VSP architecture which typically could be an URI, et.c. Provisioning is traditionally done either manually by typing the required data in a User Interface on each endpoint, or remotely from a Video conferencing Management Suit where the endpoints are already registered.

The present invention discloses a method, computer program and device for identifying and provisioning IP terminals like video conference endpoints connected to a common LAN. According to one embodiment of the invention, a provisioning server sends an email with a provisioning URL to a user which is being asked to activate the URL while the computer receiving the email is connected to the LAN. At activation, an http session is established between the computer and a provisioning server. The provisioning server then delivers configuration details for the subscription together with a Java applet which is executable on a Java virtual Machine on the computer. The Java applet starts by extracting the IP address of the computer. It then scans the LAN for video communication endpoints by sending out media protocol request like SIP or H.323 requests addressed with IP addresses belonging to the same IP address segment as the computer's IP address. The computer then provision the IP units responding to the media protocol requests by inserting required settings into the endpoints via XML files adjusted to the certain systems units identified.

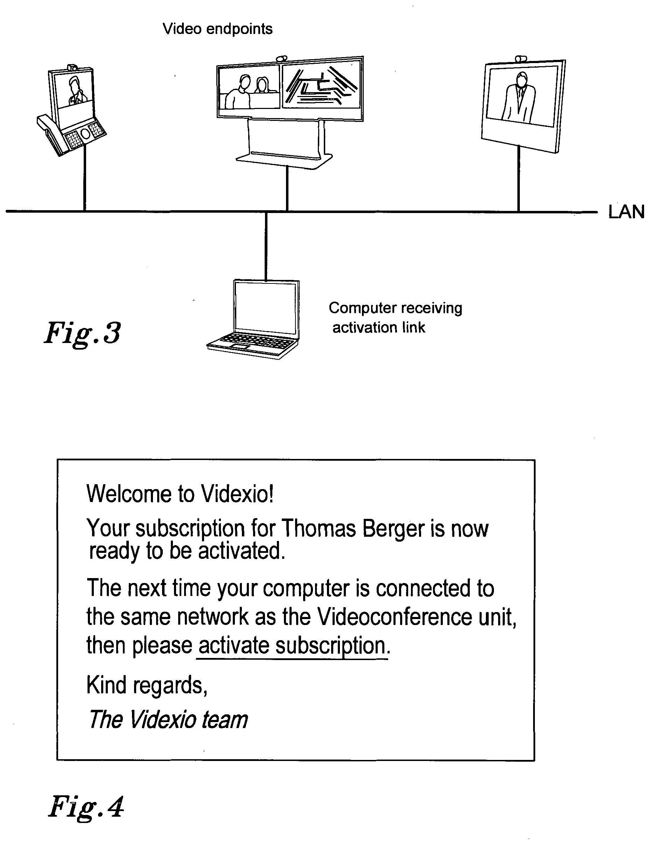

In the following, an example embodiment of the present invention will be further described. Figure 3 illustrates a LAN with a three video endpoints and a computer connected thereto. The LAN could e.g. be a new VSP subscriber's LAN where the endpoints are still not provisioned to the VSP network.

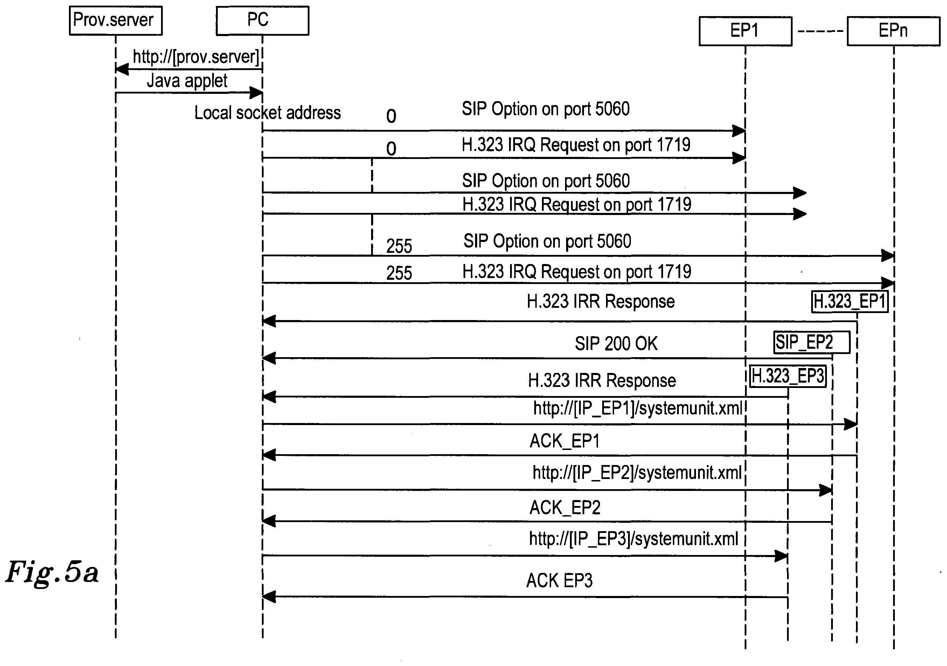

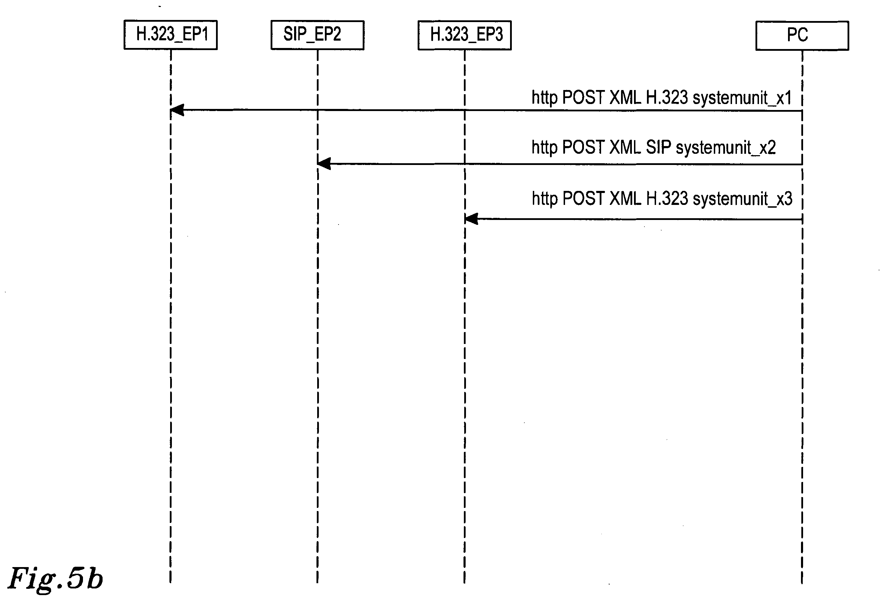

According to the example embodiment, the provisioning process is initiated when a provisioning email is being sent to an email address given by the new subscriber. A user at the new subscriber opens the email that may appear as illustrated in figure 4. The email includes a link and an instruction to the user to click on the link when the computer (PC) is connected to the same network (LAN) as the endpoint to be provisioned. In an alternative embodiment of the invention, the process is initiated without The provision process starts when the user clicks on the link. Figure 5a and 5B show the message flow during the provisioning process on a high level including both IP, SIP and H.323 terminology. The terms are not necessarily precisely according to standards, but still sufficiently descriptive so that a person skilled in the art would be able to reconstruct the process.

The link in the email is addressed to the provisioning server at the VSP. Therefore, an http request is sent from the computer to the provisioning server. The provisioning server is adjusted to respond to the http request by delivering a Java applet (or any other code packages similar to Java applet). In an alternative embodiment of the invention, the Java applet (or similar) is provided to the computer without the initial http connection with the provisioning server, but brought to the computer in e.g. a memory stick or via a hand held device through wireless transfer.

The Java applet contains instructions to the computer on how to proceed, and is executable on a Java Virtual Machine (JVM) preferably preinstalled on the computer. The applet starts by extracting the computer's IP address with an internal "Request local socket address", the computer responds with a "Local socket address" which includes the IP address of the computer.

The applet is now aware of one IP address of the local network to which the endpoints are connected. The present invention utilizes the fact that the IP addresses assigned to IP units connected to the same LAN defined as a subnet most often belongs to one IP address segment, which usually is of the size 256. When one IP address is known, the segment is therefore also known, and there will in most cases be 256 possible IP addresses assigned to the IP units in the LAN. The video conference units of today are adjusted to communicate either according to the SIP standard or the h.323 standard (or both). When sending a SIP request to units in an IP network, only SIP units will respond, and sending an h.323 request to units in an IP network, only h.323 units will respond. According to the present invention, one SIP request message and one h.323 request message are unicasted from the computer to all possible IP addresses in the segment of the computer's LAN. As illustrated in figure 5, a SIP Option message is sent out on port 5060 and an h.323 IRQ Request message is sent out on port 1719 on all 255 possible IP addresses that can be hosted on the LAN. The ports 5060 and 1719 are chosen because video conference endpoints always are "listening" to these ports. Port 1718 could also be used to facilitate a broadcast, but port 1719 is used as it will give more hits.

The result of sending out SIP and h.323 requests on the above-mentioned ports addressing them to all IP addresses in the segment to which the IP address of the computer belongs, is that no one but all endpoints connected to the same LAN as the computer will respond. What kind of responses will depend on whether the endpoints are SIP or H.323 units. Most SIP units will respond with 200 OK and h.323 units will respond with IRR Response. These responses include i.a the IP addresses of the responders. In the example illustrated in figure 5, three endpoints are responding to the requests sent out from the provisioning server, one SIP unit (SIP_EP2) and two h.323 units (h.323_EP1 and h.323_EP3).

At this point, the computer has identified the IP addresses of the endpoints connected to the new subscriber's LAN and to which standard they are configured. However, provisioning of video endpoints vary from one unit to another. As an example, a Cisco EX90 unit has a different format of the provisioning file to be inserted via the codec API than a Polycom HDX 4500 (Video endpoints are always equipped with a codec for coding and decoding media data, and most often have Application Programming Interface (API) installed). Therefore, to complete the provisioning process, the computer also needs to have system information of the identified video conferencing unit. System information can be accessed through various different URLs. Based on the response from the SIP or H.323 probes, you might try different URLs or other API requests to access the IP terminal. On a Cisco Telepresence unit the preferred URL would be http://IP/systemunit.xml, where IP is the unit's IP address. The system information of a Cisco EX60 unit with the IP address 192.168.1.114, can be accessed through the URL http://192.168.1.114/systemunit.xml. The PC creates an URL for all known system units including the respective IP addresses of the identified video conferencing units. Information gathered are presented to the user so he/she can visualize the IP terminals found and give the user a possibility to choose the correct IP terminal to provision. In the example illustrated in figure 5, only endpoints from one vendor is present, so that the same URL format can be used. When an URL complies with the system unit type of one of the endpoints, it will respond with an acknowledge message including identification of the responder and the system unit.

The PC has in the example of figure 5a identified all information required to carry out a remote provisioning of the video conferencing units connected to the LAN. Remote provisioning can be done by establishing a http connection to the video conference unit (or other API used), and inserting an XML post into the unit through the API of the incorporated codec. Figure 5b shows how the XML files are inserted into the endpoints by POST commands including XML files adjusted to the system unit types already identified for the respective endpoints. The XML file may in turn include an URL to the provisioning server which is being activated by the endpoint, so that the settings are actually loaded from the provisioning server to the endpoint, which will complete the provisioning process.

When the process is completed an email can be sent to the subscriber with a list of endpoints that have been provisioned successfully.In the embodiments discussed above, only SIP and H.323 adjusted video endpoints are discussed. However, provisioning of IP terminals using other media communication protocols could be imaginable for a person skilled in the art, and would be included in the scope of the present invention. The scope is neither limited to video communication, but would be useful also for provisioning of Voice over IP (VoIP) terminals.Note that the provisioning method according to the present is applicable for both first time provisioning and re-provisioning in the case where the user changes VSP or wishes to swap subscriptions between endpoints.

The scope of the present application as defined in the independent claims also includes special case LANs like WLAN or WiFi, and the computer is not limited to a traditional PC or laptop, but could be any kinds of computer devices included smart phones and video conferencing endpoints. Also within the scope of the present application as defined in the independent claims, the computer executable code is not limited to Java Applets running on JVM, but could also be code downloaded to and executed on a smart phone or cell phone app.

## Claims

1. A method for provisioning one or more Internet Protocol, IP, terminals connected to a first IP network, the method comprising:
III. running a computer executable code on a computer on the first IP network which includes the steps of
(1) extracting the IP address of the computer,
(2) respectively addressing one or more media communication protocol requests to each IP address in the range or segment of IP addresses to which the IP address of the computer belongs, and unicasting said requests in the first IP network from the computer,
(3) identifying all IP terminals and corresponding media communication protocols from each media communication protocol response received by the computer to said requests unicast, and
(4) remotely provisioning the one or more IP terminals from the computer and/or a provisioning server,
wherein said one or more media communication protocols are protocols associated with the transport of real-time voice and video over IP data networks.

2. A method according to claim 1, **characterized in that** it includes the following steps prior to step I:
I. establishing a first http connection from the computer connected to the first IP network to a server connected to a second IP network,
II. transmitting a computer executable code from the server to the computer

3. A method according to claim 2, **characterized in that** step I is initiated when a URL is activated on the computer provided by the server in an email sent to a user accessing the computer.

4. A method according to claim 1 or 2,
**characterized in that** step III 1) includes a "request local socket address request", and that the computer responds to the "request local socket address request" with a "local socket address" response providing the IP address of the computer.

5. A method according to claim 1 or 2,
**characterized in that** step III 4) further includes:
a) creating one URL from each of the n IP addresses identifying the one or more IP terminals and each of m number of known system units in the format http://[IP_address]/[system unit] resulting in mxn URLs
b) attempting to establish an http connection for each of the mxn URLs
c) for each acknowledged http connection, respectively provisioning the one or more IP terminals by posting an XML file into each IP terminal selected according to system unit associated with the respective URL being acknowledged.

6. A method according to claim 5, **characterized in that** the XML file includes required settings for providing a respective one of the one or more IP terminals access to a network service.

7. A method according to claim 1 or 2,
**characterized in that** the media communication protocol is Session Initiated Protocol, SIP, and/or H.323.

8. A method according to claim 1 or 2,
**characterized in that** one or more IP terminals are video conferencing, endpoints telepresence systems and/or Voice over IP, VoIP, terminals.

9. A method according to claim 1 or 2,
**characterized in that** the first IP network is a Local Area Network, LAN.

10. A method according to claim 1 or 2,
**characterized in that** the computer executable code is a Java applet.

11. A provisioning system adjusted to provision one or more Internet Protocol, IP, terminals connected to a first IP network, the provisioning system comprising:
means for establishing a first http connection from a computer connected to the first IP network to a provisioning device connected to a second IP network, and
means for extracting the computer's IP address from the computer,
means for respectively addressing one or more media communication protocol requests to each IP address in the range or segment of IP addresses to which the IP address of the computer belongs, and unicasting said requests in the first IP network,
means for identifying all IP terminals and corresponding media communication protocols from each media communication protocol response received by the computer to said requests unicast, and
means for provisioning the one or more IP terminals from the computer and/or provisioning server,
wherein said one or more media communication protocols are protocols associated with the transport of real-time voice and video over IP data networks.

## Patentansprüche

1. Verfahren zum Beliefern von einem oder mehreren Internetprotokoll-, IP, Endgeräten, die mit einem ersten IP-Netz verbunden sind, wobei das Verfahren umfasst:
III. Ausführen eines computerausführbaren Codes auf einem Computer im ersten IP-Netz, was die Schritte einschließt des
(1) Extrahierens der IP-Adresse des Computers,
(2) jeweiligen Adressierens von einer oder mehreren Medienkommunikationsprotokoll-Anfragen an jede IP-Adresse in dem Bereich oder Segment von IP-Adressen, zu dem die IP-Adresse des Computers gehört, und Unicasten der Anfragen im ersten IP-Netz vom Computer aus,
(3) Identifizierens aller IP-Endgeräte und entsprechenden Medienkommunikationsprotokolle aus jeder Medienkommunikationsprotokoll-Antwort, die vom Computer auf die Unicast-Anfragen empfangen wird, und
(4) Belieferns des einen oder der mehreren IP-Endgeräte aus der Ferne vom Computer und/oder einem Bereitstellungsserver aus,
wobei es sich bei dem einen oder den mehreren Medienkommunikationsprotokollen um Protokolle handelt, die mit dem Transport von Echtzeit-Sprache und Video über IP-Datennetze verknüpft sind.

2. Verfahren nach Anspruch 1, **dadurch gekennzeichnet, dass** es vor Schritt I die folgenden Schritte einschließt:
I. Herstellen einer ersten http-Verbindung von dem Computer, der mit dem ersten IP-Netz verbunden ist, zu einem Server, der mit einem zweiten IP-Netz verbunden ist,
II. Übertragen eines computerausführbaren Codes vom Server an den Computer.

3. Verfahren nach Anspruch 2, **dadurch gekennzeichnet, dass** Schritt I eingeleitet wird, wenn auf dem Computer eine in einer E-Mail bereitgestellte URL aktiviert wird, die einem auf den Computer zugreifenden Benutzer vom Server gesendet wurde.

4. Verfahren nach Anspruch 1 oder 2,
**dadurch gekennzeichnet, dass** Schritt III 1) eine "request local socket address"-Anfrage einschließt, und dass der Computer auf die "request local socket address"-Anfrage mit einer "local socket address"-Antwort antwortet, die die IP-Adresse des Computers bereitstellt.

5. Verfahren nach Anspruch 1 oder 2,
**dadurch gekennzeichnet, dass** Schritt III 4) weiter einschließt:
a) Erzeugen einer URL aus jeder der n IP-Adressen, die das eine oder die mehreren IP-Endgeräte identifizieren, und jeder von m bekannten Systemeinheiten im Format http://[IP-Adresse]/[Systemeinheit], was zu mxn URLs führt,
b) Versuchen, für jede der mxn URLs eine http-Verbindung herzustellen,
c) jeweiliges Beliefern des einen oder der mehreren IP-Endgeräte bei jeder bestätigten http-Verbindung durch Posten einer XML-Datei in jedem IP-Endgerät, ausgewählt nach Systemeinheit, die mit der jeweiligen URL, die bestätigt wird, verknüpft ist.

6. Verfahren nach Anspruch 5, **dadurch gekennzeichnet, dass** die XML-Datei erforderliche Einstellungen umfasst, um einem jeweiligen aus dem einen oder den mehreren IP-Endgeräten Zugriff auf einen Netzdienst bereitzustellen.

7. Verfahren nach Anspruch 1 oder 2,
**dadurch gekennzeichnet, dass** es sich beim Medienkommunikationsprotokoll um Session Initiated Protocol, SIP, und/oder H.323 handelt.

8. Verfahren nach Anspruch 1 oder 2,
**dadurch gekennzeichnet, dass** es sich bei einem oder mehreren IP-Endgeräten um Videokonferenz-, Endpunkt-, Telepräsenzsystem- und/oder Voice over IP-, VolP, Endgeräte handelt.

9. Verfahren nach Anspruch 1 oder 2,
**dadurch gekennzeichnet, dass** es sich beim ersten IP-Netz um ein Local Area Network, LAN, handelt.

10. Verfahren nach Anspruch 1 oder 2,
**dadurch gekennzeichnet, dass** es sich beim computerausführbaren Code um ein Java-Applet handelt.

11. Bereitstellungssystem, das dazu angepasst ist, ein oder mehrere Internetprotokoll-, IP, Endgeräte, die mit einem ersten IP-Netz verbunden sind, zu beliefern, wobei das Bereitstellungssystem umfasst:
Mittel zum Herstellen einer ersten http-Verbindung von einem Computer, der mit dem ersten IP-Netz verbunden ist, zu einer Bereitstellungsvorrichtung, die mit einem zweiten IP-Netz verbunden ist, und
Mittel zum Extrahieren der IP-Adresse des Computers aus dem Computer,
Mittel zum jeweiligen Adressieren von einer oder mehreren Medienkommunikationsprotokoll-Anfragen an jede IP-Adresse in dem Bereich oder Segment von IP-Adressen, zu dem die IP-Adresse des Computers gehört, und Unicasten der Anfragen im ersten IP-Netz,
Mittel zum Identifizieren aller IP-Endgeräte und entsprechenden Medienkommunikationsprotokolle aus jeder Medienkommunikationsprotokoll-Antwort, die vom Computer auf die Unicast-Anfragen empfangen wird, und
Mittel zum Beliefern des einen oder der mehreren IP-Endgeräte vom Computer und/oder Bereitstellungsserver aus,
wobei es sich bei dem einen oder den mehreren Medienkommunikationsprotokollen um Protokolle handelt, die mit dem Transport von Echtzeit-Sprache und Video über IP-Datennetze verknüpft sind.

## Revendications

1. Procédé pour mettre en service un ou plusieurs terminaux à protocole Internet, IP, connectés à un premier réseau IP, le procédé consistant :
III. à exécuter un code exécutable par ordinateur sur un ordinateur sur le premier réseau IP qui comprend les étapes consistant
(1) à extraire l'adresse IP de l'ordinateur,
(2) à adresser respectivement une ou plusieurs demandes de protocole de communication multimédia à chaque adresse IP dans la plage, ou le segment, d'adresses IP à laquelle, ou auquel, l'adresse IP de l'ordinateur appartient et à diffuser individuellement lesdites demandes dans le premier réseau IP à partir de l'ordinateur,
(3) à identifier tous les terminaux IP et les protocoles de communication multimédia correspondants à partir de chaque réponse de protocole de communication multimédia reçue par l'ordinateur pour lesdites demandes diffusées individuellement, et
(4) à mettre en service à distance le ou les terminaux IP à partir de l'ordinateur et/ou d'un serveur de mise en service,
dans lequel ledit ou lesdits protocoles de communication multimédia sont des protocoles associés au transport de voix et de vidéo en temps réel sur des réseaux de données IP.

2. Procédé selon la revendication 1, **caractérisé en ce qu'**il comprend les étapes suivantes avant l'étape I :
I. à établir une première connexion http à partir de l'ordinateur connecté au premier réseau IP avec un serveur connecté à un second réseau IP,
II. à transmettre un code exécutable par un ordinateur à partir du serveur à l'ordinateur.

3. Procédé selon la revendication 2, **caractérisé en ce que** l'étape I est initiée lorsqu'un URL est activé sur l'ordinateur fourni par le serveur dans un courrier électronique envoyé à un utilisateur ayant accès à l'ordinateur.

4. Procédé selon la revendication 1 ou 2,
**caractérisé en ce que** l'étape III 1) comprend une « demande d'adresse de connecteur logiciel locale de demande » avec une réponse « d'adresse de connecteur logiciel locale » fournissant l'adresse IP de l'ordinateur.

5. Procédé selon la revendication 1 ou 2,
**caractérisé en ce que** l'étape III a) consiste en outre :
a) à créer un URL à partir de chacune des n adresses IP identifiant le ou les terminaux IP et de chacun de m nombre d'unités de système connues dans le format http://[IP_qddress]/[system unit] ayant pour résultat m x n URL,
b) à tenter d'établir une connexion http pour chacun des m x n URL,
c) pour chaque connexion http reconnue, à mettre respectivement en service le ou les terminaux IP en postant un fichier XML dans chaque terminal IP sélectionné en fonction d'une unité de système associée à l'URL respectif qui est reconnu.

6. Procédé selon la revendication 5, **caractérisé en ce que** le fichier XML comprend des paramètres requis pour fournir à un terminal IP ou à un terminal IP respectif des terminaux IP un accès à un service de réseau.

7. Procédé selon la revendication 1 ou 2,
**caractérisé en ce que** le protocole de communication multimédia est un protocole d'établissement de session, SIP, ou H.323.

8. Procédé selon la revendication 1 ou 2,
**caractérisé en ce qu'**un ou plusieurs terminaux IP sont des systèmes de visioconférence, de téléprésence de points d'extrémité et/ou des terminaux de voix par IP, VoIP.

9. Procédé selon la revendication 1 ou 2,
**caractérisé en ce que** le premier réseau IP est un réseau local, LAN.

10. Procédé selon la revendication 1 ou 2,
**caractérisé en ce que** le code exécutable par un ordinateur est un applet Java.

11. Système de mise en service réglé pour mettre en service un ou plusieurs terminaux à protocole Internet, IP, connectés à un premier réseau IP, le système de mise en service comprenant :
des moyens pour établir une première connexion http à partir d'un ordinateur connecté au premier réseau IP avec un dispositif de mise en service connecté à un second réseau IP,
des moyens pour extraire l'adresse IP de l'ordinateur de l'ordinateur,
des moyens pour adresser respectivement une ou plusieurs demandes de protocole de communication multimédia à chaque adresse IP dans la plage, ou le segment, d'adresses IP à laquelle, ou auquel, l'adresse IP de l'ordinateur appartient, et pour diffuser individuellement lesdites demandes dans le premier réseau IP,
des moyens pour identifier tous les terminaux IP et les protocoles de communication multimédia correspondants à partir de chaque réponse de protocole de communication multimédia reçue par l'ordinateur pour lesdites demandes diffusées individuellement, et
des moyens pour mettre en service le ou les terminaux IP à partir de l'ordinateur et/ou d'un serveur de mise en service,
dans lequel ledit ou lesdits protocoles de communication multimédia sont des protocoles associés au transport de voix et de vidéo en temps réel sur des réseaux de données IP.
